# EUROPEAN PATENT APPLICATION

(11) **EP 4 095 112 A1**
(43) Date of publication of application: **30.11.2022**
(21) Application number: 21744948.7
(22) Date of filing: 20.01.2021
(51) Int. Cl.: C04B 35/524, C09D 5/08

(54) **ANTICORROSIVE ENAMEL COMPRISING CARBONACEOUS MATERIAL, METHOD FOR OBTAINING SAME AND USE THEREOF**

(30) Priority: 20.01.2020 ES 202030035
(71) Applicant: Primalchit Solutions, S.L., 46002 Valencia (ES)
(72) Inventor: LLOBELL LLEO, Juan Ramón, 46002 VALENCIA (ES); GARCIA MONDRIA, Regina María, 46002 VALENCIA (ES)
(74) Representative: Ungria López, Javier
(86) International application number: PCT/ES2021/070032
(87) International publication number: WO 2021/148695

(57) **Abstract**

The present invention describes a continuous anticorrosive enamel coating, characterised in that it comprises a carbonaceous vitreous enamel with an amorphous structure, with a carbon atom content greater than 40 % with respect to the total number of atoms, wherein the carbon atoms are sp2 and sp3 hybridised, the coating having a uniform thickness of 1-100 nm on the surface of a substrate. The invention also relates to a method for obtaining the continuous anticorrosive enamel coating, and to the use thereof to form, on the surface of a substrate, a continuous layer that is resistant to corrosion and chemical and environmental oxidation.

## Description

### TECHNICAL SECTOR

The present invention describes continuous anticorrosive enamel coatings formed by a thin film made of an amorphous carbonaceous vitreous material which may or may not incorporate particulate components and suitable methods which allow coating objects of any spatial form and size with this enamel.

### STATE OF THE ART

There are materials the properties of which experience corrosion and deterioration when they are exposed for prolonged periods to environmental conditions both in terrestrial and marine environments, or when they are immersed in special media and environments. To slow down deterioration and corrosion as much as possible, materials can be coated with special thin micrometric layers which protect them from the negative effect of environmental agents (Sørensen, P. A., et al. Anticorrosive coatings: a review. Journal of Coatings Technology and Research. 2009. 6(2): 135-176). Example of materials which are subjected to surface treatments to prevent corrosion are objects based on iron and other metals, as well as building elements.

Anticorrosive treatments create a continuous layer, generally measuring several microns in thickness, and typically between 1 and 10 microns, the purpose of which is to coat the material to be protected and to prevent direct contact of the material with the atmosphere or the environment. One of the most widely used types of anticorrosive coatings consists of a dispersion of different particles in suitable proportions that are suspended in water or in other media containing organic solvents (Hare, C. H. and S. J. Wright. Anti-corrosive primers based on zinc flake. 1982, url: https://trid.trb.org/view/416244, access date 11 December 2019). The particles present in the dispersion have sizes between 100 nm and several microns. The largest particles have generally planar shapes which facilitate the formation of the protective layer. Metallic particles of elements such as Zn, Al, Ni and/or others, in addition to metal oxides such as TiO₂, Al₂O₃, SiO₂, among others, are found in higher percentages in the composition of these conventional commercial coatings. Other additives can be metal alkoxides including, among others, alkoxysilanes and titanium or aluminum alkoxides.

The components of commercial coatings must serve the purpose of creating a continuous barrier on the substrate preventing the contact thereof with the environment and of providing protection against the corrosion-causing redox or acid/base chemical process. In that sense, some metallic particles, such as metallic particles of Zn or Ni, serve the purpose of acting as sacrificial agents, experiencing chemical oxidation more readily than the substrate they coat, so by oxidizing in preference to the substrate that they protect, said particles prevent the corrosion of the substrate. Furthermore, metal oxides and metal alkoxides can act as binders, filling the space and creating a continuous barrier which prevents the surface of the coated substrate from being exposed to the environment. Besides serving as sacrificial agents and a barrier, other common functions of the components of the coatings include an aesthetic function, adherence promoting function, ion scavenging function, etc.

These types of coatings contain in a small proportion or may not contain carbon compounds, such as polymer particles, which help to seal the surface and prevent corrosion by means of barrier effect.

The anticorrosive efficiency of the coatings can be evaluated by different methods, such as immersion in solutions having different concentrations of acidic, basic, or oxidizing chemical agents. A common reagent is a 0.1 M aqueous HCI solution. Another more standardized method is the exposure of the protected element to the environment of a saline chamber in which the material is subjected to programmed cycles of saline vapor at different temperatures for different times. This treatment in a saline chamber is equivalent to an accelerated treatment of exposure to natural environments, with 1 h of treatment being equivalent to several days of exposure to the elements. The efficiency of all the coatings is obviously not the same, with there being commercial coatings which have a greater protective efficacy than others.

In the state of the art, the method for evaluating the anticorrosive efficiency commonly ensures the protection of the element with the anticorrosive coating for a period equivalent to five years of exposure in specific climates and environments.

In this context, new anticorrosive coatings which protect iron materials in marine environments for a period certified to be equal to or more than ten years are sought.

Other types of commonly used anticorrosive coatings are based on coating the material to be protected with an organic polymer of a specific nature, which may or may not contain additives which enhance its action (Sørensen, P. A., et al. Anticorrosive coatings: a review. Journal of Coatings Technology and Research. 2009. 6(2): 135-176). This polymer can be synthetic polymer such as polyaniline or can be a natural polymer such as chitosan (Deng, Y.-q., et al. "Development of the research in polyaniline anti-corrosion coatings". Corrosion and protection-nanchang. 2003. 24(8): 333-336; El-Fattah, M. A., et al. "Improvement of corrosion resistance, antimicrobial activity, mechanical and chemical properties of epoxy coating by loading chitosan as a natural renewable resource." Progress in Organic Coatings. 2016. 101: 288-296). These polymers may incorporate antioxidant additives which protect the substrate that they coat from the redox chemical process. Nevertheless, many of these organic coatings present the drawback of being etched by solvents, among others, by water at different pH values.

Furthermore, plastic precursor polymers as anticorrosive coatings may also present drawbacks including, among others, the presence of porosity, etching by water in a certain range of pH values or etching by organic solvents, as well as aging and degradation as a result of exposure to sunlight or other environmental conditions, in addition to the fact that adhesion to the substrate is usually insufficient.

In the normal practice, anticorrosive treatments are carried out by means of applying the coatings described above on previously cleaned and pre-treated surfaces following different methods such as immersing the object in a suspension, spraying the object with an aerosol, or applying the coating by means of painting the object. Subsequently, the treatment is completed with a thermal treatment or annealing step which promotes adherence between the substrate and the coating layer, but does not change the chemical composition of the coating. Annealing is not possible for large objects.

As discussed, current coatings do not have carbon or have a low percentage of carbon, and modification of the coatings therefore does not occur when they are subjected to physical treatments, making them different from the invention herein described. As described below, the drawbacks of the coatings used today in the normal practice are largely overcome if these plastic organic coatings are transformed into carbonaceous vitreous enamels containing heteroatoms other than O. Heteroatom is understood to mean any element of the periodic table of chemical elements other than C and H.

Therefore, the present document describes a series of coatings which, by means of the suitable treatment, experience a severe alteration in their initial chemical structure, with their elemental composition varying considerably such that, by containing heteroatoms other than O, the percentage of carbon increases significantly with respect to the initial values, improving the adhesion thereof to the substrate exponentially and coating the surface of the substrate completely without any cracks, regardless of the geometric form and size of said substrate. In an unexpected manner according to the state of the art, these carbonaceous coatings with heteroatoms other than O have an anticorrosive efficiency measured in a mist chamber that is greater than the carbonaceous vitreous coatings the composition of which contains C, H, and O.

The present invention is therefore presented as a very advantageous alternative with respect to the anticorrosive enamels existing today on the market. Said invention relates to a carbonaceous vitreous enamel containing, in addition to O, another or other heteroatoms, which is based on the capacity of some polymers to form continuous films on three-dimensional objects and which, surprisingly and unexpectedly, are transformed into carbonaceous vitreous enamels containing, in addition to O, another or other heteroatoms without discontinuity or breakage being produced in the precursor film transformation process.

### DESCRIPTION OF THE INVENTION

The present invention describes an amorphous carbonaceous anticorrosive coating with a vitreous aspect, which is synthesized from precursors suitable for obtaining these coatings. Likewise, another object of the present invention relates to a method through which said anticorrosive coating is obtained and to the use thereof for forming a continuous layer on materials of any geometry, nature, or size.

Therefore, a first object of the present invention relates to a carbonaceous anticorrosive coating for coating a substrate, characterized in that:
a. it comprises a carbonaceous vitreous enamel with an amorphous structure, with a carbon atom content greater than 40% and wherein said carbon atoms are sp² and sp³ hybridized;
b. it has a uniform thickness on the surface of the substrate of 1-100 nm.

In a particular embodiment of the present invention, the carbonaceous anticorrosive coating for coating a substrate is characterized in that:
a. it comprises a carbonaceous vitreous enamel with an amorphous structure comprising:
   - a percentage greater than 40% of carbon atoms which are sp² and sp³ hybridized, and
   - oxygen atoms (O) in a percentage below 20%, preferably between 0.1% and 20% by weight;
   - one or more heteroatoms other than O in a percentage below 20%, preferably between 0.1% and 20% by weight; the percentage by weight being with respect to the total; and
b. it has a uniform thickness on the surface of the substrate of 1-100 nm.

In the scope of the present invention, carbonaceous anticorrosive coating is understood to mean a submicrometric thick layer with a percentage of carbon greater than 40%, preferably greater than 60%, and even more preferably 80% or greater, and in which one or more heteroatoms other than O are present in individual mass percentages below 20% for each of them. The coating herein described can have a thickness of several nanometers and typically less than 100 nanometers (nm). The minimum thickness of the coating can be 1 nm. In the context of the present invention, said coating is a continuous coating on the entire surface of the substrate or material on which it is deposited for the purpose of protecting said material from the eroding or corrosive action of environmental or chemical agents.

In the present document, vitreous enamel or enamel is understood to mean an amorphous coating material with an undefined chemical structure which has brightness and is obtained by thermal treatment which causes the transformation of a precursor polymer into a carbonaceous vitreous material which presents adherence and anticorrosive properties as described in the present document.

In embodiments of the present invention, the atom content comprised in the anticorrosive coating is given in percentage by weight with respect to the total.

By having an amorphous chemical structure, the anticorrosive coating object of the present invention can be characterized by means of electron and atomic force microscopy techniques. Scanning electron microscopy can be coupled with fast ion bombardment which allows excavating the surface of the material up to tens of microns. By means of this scanning microscopy-ion bombardment combination, it is possible to determine with a precision of tens of nanometers the thickness of the coating layer, as well as the presence and the size of particles that may be contained therein. Moreover, scanning electron microscopy allows the use of an energy-dispersive X-ray spectroscopy (EDS) detector which enables obtaining images of the location of certain heteroatoms, particularly those with a higher atomic weight such as S, P, and Si. The scanning electron microscopy technique may require handling the object and cutting a certain part thereof so that it can be introduced in the chamber of the microscope.

Atomic force microscopy allows determining the thickness of the coating layer with nanometric resolution. It may require adapting the specimen to be measured to the microscopy equipment such as, for example, cutting a portion of the part. Thickness is determined by comparing the height of the tip of the microscope on the coating and in a portion of the part in which the film has been removed, for example, by making a cut in the film with a sharp object.

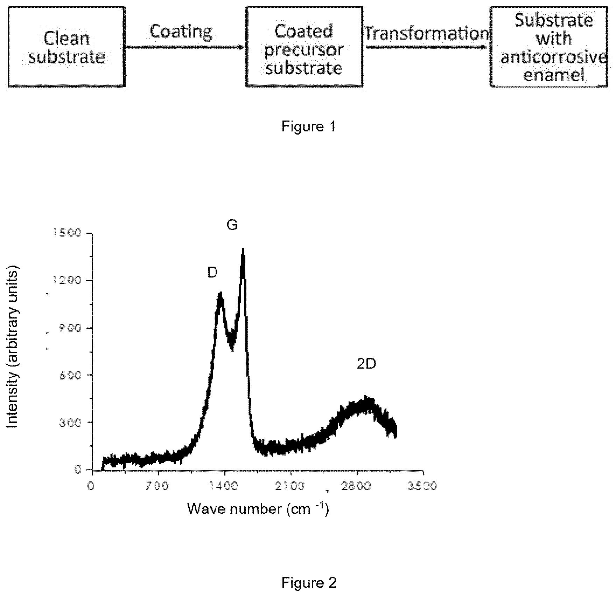

Vibrational Raman spectroscopy for the coating herein described generally has three wide bands which appear at 2700-2950, 1590, and 1350 cm⁻¹ and are known as 2D, G, and D bands in carbonaceous materials. The width and relative intensity of these bands can vary from one coating to another depending on the nature of the precursor, with the range of values between the intensity of G band with respect to D band being between 0.8 and 1.5. This Raman spectroscopy provides spectra of the coated surface which can be considered the common fingerprint for the carbonaceous vitreous coatings described in the present invention, although it does not allow determining the elemental composition or the nature of the heteroatoms present. By way of illustration, Figure 2 of the present document provides a Raman spectrum of one of the coatings of the present invention.

X-ray photoelectron spectroscopy (XPS) allows establishing the relative atomic proportion in the surface of the elements present in the coating. This technique also indicates the distribution of each element in different chemical families depending on the percentages of each atom that different coordination environments have. In that sense, XPS analysis of the coatings of the present invention reveals the presence of the C1s peak at a binding value of about 285 eV with different components including, among them, sp² graphitic carbon atoms, carbon attached to oxygen atoms with single, double, and triple bonds. Oxygen is another element which is also generally present in carbonaceous enamels and characterized by the O1s peak which appears at a binding energy value of about 533 eV.

In an embodiment of the present invention, the anticorrosive coating may comprise heteroatoms or additives or a combination of both, as described below in the present document. In said preferred embodiments of the invention, the presence of heteroatoms in the carbonaceous enamel, such as N and P, can also be detected in XPS, by means of observing peaks corresponding to these elements. If the coating contains additives such as Zn or Ni nanoparticles, the constitutive elements of these additives can also be detected in XPS. The relative intensity of XPS peaks enables quantifying the atomic proportion of these elements present in the surface of the enamel.

In particular embodiments of the present invention, the anticorrosive coating herein described also contains one or more heteroatoms other than oxygen (O) and may further comprise additives, as described below in the present document. The presence of heteroatoms in the carbonaceous enamel, such as N, S. and P, can also be detected in XPS, by means of observing peaks corresponding to these elements.

In particular embodiments of the present invention, the coating object of the invention may comprise at least one heteroatom other than O in a percentage below 20% by weight, preferably between 0.1% and 20% by weight, more preferably between 0.1% and 10%, more preferably between 1% and 8% by weight, and even more preferably between 2% and 8% by weight with respect to the total of the coating. In particular embodiments of the invention, at least one heteroatom other than O is selected from the group consisting of N, P, S, Si, B, and a combination thereof, and preferably selected from the group consisting of N, S, P, B, and a combination thereof.

The adherence of the enamels on the support can be determined by means of standard methods applicable to coatings. One simple way is the adhesive tape test on the coating previously marked in grids. The adherence of the coatings to the substrates depends on several factors, including the nature of the substrate and the prior treatments thereof before the coating of the precursor.

The anticorrosive property of the carbonaceous vitreous enamel herein described results from the chemical nature of the enamel which is resistant to oxidation upon exposure to the atmosphere and/or aggressive environments and from its capacity to completely coat a three-dimensional object of any size without there being any cracks, holes, or discontinuity in the coating. Unexpectedly, the anticorrosive efficiency of the carbonaceous vitreous enamels herein disclosed is much greater than that of related carbonaceous vitreous coatings which contain only C, H, and O in their composition.

The carbonaceous vitreous enamel herein described therefore creates an inert protective barrier coating the substrate. Other properties resulting from the nature of the coating object of the invention which may play a role in protection against corrosion are its hydrophobic nature, absorption in the ultraviolet region, possible ion scavenging capacity, and possible electric and thermal conductivity.

In addition to the barrier effect, these carbonaceous vitreous enamels may present anticorrosive properties causing the coated substrate to be protected from environmental corrosion, even in highly aggressive media. The present invention therefore describes the nature of these enamels, the suitable organic polymer precursors, and the innovative methods which allow transforming a thin film made of these precursors into a continuous coating formed by a carbonaceous vitreous enamel which protects against corrosion.

The coating object of the invention is obtained from polymers which, in the present document, are referred to as precursor polymers. Said precursor polymers are already described in the state of the art as anticorrosive coatings. However, in a novel and unexpected manner, the present invention describes an anticorrosive coating which is obtained from some of these precursor polymers which, by means of transformation, give rise to heteroatom-containing continuous carbonaceous anticorrosive enamels in which a change in the chemical structure of said precursor polymer has been caused to yield an amorphous material with an undefined structure which shows greater adherence and protection against corrosion. The structural change herein described is such that any of the spectroscopic properties characterizing the polymer is no longer observed and the spectra experience drastic changes when transformation of the precursor polymers into the carbonaceous vitreous enamel takes place.

In embodiments of the present invention, the transformation of the precursor polymers is a thermal transformation, but it can be carried out by means of original treatments not known in the state of the art.

The polymer precursors suitable for the present invention are those which fulfill the following requirements: i) forming shape-conforming and continuous thin films on the substrates, without any cracks or holes, ii) being able to be transformed into continuous carbonaceous vitreous films containing one or more heteroatoms other than O without the films cracking, breaking, and iii) being resistant to oxidation.

In embodiments of the present invention, the polymer precursors of the present invention comprise one or more heteroatoms other than O in a percentage below 20% by weight, preferably between 0.1% and 20% by weight, more preferably between 0.1% and 10%, more preferably between 1% and 8% by weight, and even more preferably between 2 and 8% by weight with respect to the total of the precursor.

In embodiments of the present invention, only some of the plastic polymers suitably fulfill the preceding properties. Among natural polymers, those that fulfill the requirements of the present invention are chitosan, alginates soluble in aqueous medium such as sodium and ammonium alginates, carrageenans, and gelatins. Plastic polymers include, among others, acrylonitrile and polystyrenes. In all cases, the structure of the resulting coating after transformation is different from the precursor polymer, and is therefore a material different from that of the starting precursor. Generally, the transformation herein described takes place with significant shrinkage in the thickness of the precursor films. By way of example, 30 nm sodium alginate films are reduced to a value of between 5 and 10 nm when they are transformed into the carbonaceous coating herein described.

In other embodiments of the present invention, only some of the plastic polymers suitably fulfill the preceding properties. Among natural polymers, those that fulfill the requirements of the present invention are chitosan, which is derivative of glycosylamine containing N, chitosan derivatives, alginates, alginate derivatives, with ammonium being the N source, carrageenans which are derivatives of glycosyl sulfate containing S, and gelatins which contain N and S. Plastic polymers include, among others, acrylonitrile and polystyrenes with substituents containing heteroatoms other than O which can be amino, thioester, or other groups. By way of example, 30 nm ammonium alginate films are reduced to a value of between 5 and 10 nm when they are transformed into the carbonaceous coating herein described.

The precursor polymers which give rise to the anticorrosive coating object of the invention include, among others, natural or synthetic precursor polymers.

In the embodiments of the present invention in which the precursor polymers are natural polymers, they can be natural polysaccharides and proteins such as alginate derivatives, chitosan, carrageenan, gelatins, and combinations of the above, and preferably, alginate, alginate derivatives, chitosan, chitosan derivatives, carrageenan, gelatins, and combinations of the above. In other embodiments of the present invention in which the precursor polymers are synthetic polymers, said polymers can be polystyrene, substituted polystyrenes containing soluble heteroatoms other than O, polyacrylonitrile, and combinations of the above.

In embodiments of the invention, when the precursor is chitosan, it comprises, in its composition, between 5% and 10% by weight of N, and preferably 5% by weight, with respect to the total of the precursor. In particular embodiments of the present invention, the alginate derivative can be phosphate ester of alginate. In a preferred embodiment, when the precursor is an alginate derivative and is phosphate ester of alginate, it comprises, in its composition, between 5% and 10% by weight of P, preferably 10%, with respect to the total of the precursor. In other particular embodiments, the chitosan derivative can be phosphate ester of chitosan or borate ester of chitosan. In embodiments of the invention, when the chitosan derivative is phosphate ester of chitosan, it comprises, in its composition, between 5% and 10% by weight of N, and preferably 5% by weight, and comprises, in its composition, between 5% and 10% of P, preferably 10 % by weight, with respect to the total of the precursor. In embodiments of the invention, when the chitosan derivative is borate ester of chitosan, it comprises, in its composition, between 5% and 10% by weight of N, and preferably 5% by weight, and comprises, in its composition, between 4% and 10% of B, preferably 4% by weight, with respect to the total of the precursor.

The process for obtaining the coating object of the invention is based on transformation, preferably thermal transformation, of the precursor polymers described above, by causing an increase in the carbon content giving rise, in some embodiments of the present invention, to the attainment of an enamel with a carbon content greater than 40%, in a preferred embodiment greater than 70%, and in other even more preferred embodiments greater than 80%. In the embodiments of the present invention, the precursor polymers comprise one or more heteroatoms other than oxygen in a mass percentage below 20% by weight individually, more preferably between 0.1% and 20% by weight, and in preferred embodiments for each heteroatom below 10% by weight, more preferably between 0.1% and 10%, more preferably between 1 and 10%, more preferably between 1% and 8% by weight, and even more preferably between 2% and 8% by weight, with respect to the total of the precursor.

As mentioned above, the carbonaceous vitreous enamel object of the invention is also characterized by containing carbons with sp² and sp³ atomic hybridization, having structural domains of fused aromatic rings and residual functional groups in randomly distributed, undefined proportions. Furthermore, the chemical structure of the carbonaceous antioxidant coating is completely different from that of the precursor polymer. These characteristics determine that the carbonaceous vitreous coatings herein described cannot be considered identical to the initial plastic polymers.

Furthermore, the resistance of the carbonaceous vitreous enamels herein described to oxidation, which is a very important property in protection against corrosion, increases with the presence of heteroatoms which, in a preferred embodiment comprising between 0 and 10% with respect to the total number of atoms of the anticorrosive coating, are selected from the group consisting of nitrogen (N), phosphorus (P), silicon (Si), boron (B), or a combination thereof, and in an even more preferred embodiment comprises nitrogen atom content below 10% in the carbonaceous enamel. This improvement in the properties is unexpected, given that films made of different materials tend to crack and the continuity thereof tends to break when their composition undergoes transformation due to thermal and structural stresses.

In embodiments of the present invention, the heteroatom content comprised in the anticorrosive coating is given in percentage by weight with respect to the total.

Another object of the present invention relates to a method through which the anticorrosive coating described in the present document is obtained, characterized in that it comprises:
a. depositing a natural or synthetic precursor polymer with a thickness between 1 nm and 100 nm on the surface of a substrate by means of immersion, painting, or aerosol, and
b. transforming the precursor polymer into a carbonaceous vitreous enamel by means of
   - thermal treatment using an electric or gas oven at a temperature between 350°C and 900°C for a period of 45 to 90 minutes; or
   - microwave irradiation at a power of between 400 W and 800 W for a period between 30 and 90 seconds, followed by a rest period of 3 to 6 minutes, with the treatment and rest interval being repeated between 2 and 6 times; or
   - magnetic induction at a temperature comprised between 400°C and 750°C for a period of between 1 and 8 minutes, followed by a rest period of between 8 and 11 minutes, in the absence of oxygen, with the treatment and rest interval being repeated between 4 and 10 times; or
   - continuous laser irradiation for 30 seconds or pulsed laser irradiation by means of 10 pulses per second for 30 seconds at a wavelength comprised between 255 and 1200 nm, with the irradiation being repeated up to a maximum of 10 times with rest intervals of one minute; or
   - by means of exposure to gas plasma at atmospheric pressure for an interval of between 12 and 18 minutes, followed by rest periods of the same time interval.

In a particular embodiment of the present invention, the method through which the anticorrosive coating described in the present document is obtained characterized in that it comprises:
a. depositing a natural or synthetic precursor polymer with a thickness between 1 nm and 100 nm on the surface of a substrate by means of immersion, painting, or aerosol, and
b. transforming the precursor polymer into a carbonaceous vitreous enamel by means of
   - microwave irradiation at a power of between 400 W and 800 W for a period between 30 and 90 seconds, followed by a rest period of 3 to 6 minutes, with the treatment and rest interval being repeated between 2 and 6 times; or
   - magnetic induction at a temperature comprised between 400°C and 750°C for a period of between 1 and 8 minutes, followed by a rest period of between 8 and 11 minutes, in the absence of oxygen, with the treatment and rest interval being repeated between 4 and 10 times; or
   - continuous laser irradiation for 30 seconds or pulsed laser irradiation by means of 10 pulses per second for 30 seconds at a wavelength comprised between 255 and 1200 nm, with the irradiation being repeated up to a maximum of 10 times with rest intervals of one minute; or
   - by means of exposure to gas plasma at atmospheric pressure for an interval of between 12 and 18 minutes, followed by rest periods of the same time interval.

In some embodiments of the present invention, transformation of the precursor is carried out in the absence of oxygen which, in the scope of the present invention, can be performed by means of an inert atmosphere consisting of displacing the oxygen within the work area with an inert gas. As known in the state of the art, said inert gas can be argon or helium.

As indicated, the polymer precursor can be disposed on the surface of the substrate by means of immersion, painting, or aerosol deposition, forming a thin layer which covers the entire surface of said material.

Prior to the formation of the precursor layer, the method object of the invention may comprise an additional step which is a pre-treatment of the surface of the substrate, whereby the adhesion of the carbonaceous anticorrosive coating herein described is favored subsequently. Though not indispensable, it is recommendable for the object to be coated to be clean. In the case of metallic objects, they are subjected to pickling by acid treatments in order to remove surface oxides. Moreover, the objects can be subjected to mechanical impacts and different forms of blasting in order to create suitable roughness on the surface of the material to be protected which allows improved adherence of the coating.

In particular embodiments of the present invention, the method comprises an additional step prior to step (a) which consists of pre-treating the surface of the substrate by means of the technique selected from the group consisting of corrosive chemical treatments with acids, bases, oxidizing or reducing agents, chemical cleaning, or physical processes such as mechanical impacts and blasting, as well as any one of the combinations thereof.

Preparation of the carbonaceous vitreous coating requires previously obtaining coatings from the precursor which is then transformed into the anticorrosive coating. An important requirement in the formation of the anticorrosive coatings herein described is the continuity of the precursor film on the substrate and the absence of spots, holes, or breakages therein. A thin precursor layer is formed on the clean and treated surface of the object to be coated. This film can be suitably formed by means of immersing the object to be protected in a solution containing the precursor, by means of painting, by means of depositing the precursor as aerosol, or in any way. The application temperature can be room temperature or higher since the application is carried out in a closed temperature-controlled chamber or enclosure.

In a preferred embodiment of the present invention, transformation of the precursor can be carried out, when the substrate so allows, by means of thermal treatment in the absence of oxygen at temperatures between 350°C and 900°C. In other preferred embodiments, the temperature of the thermal treatment is comprised between 375°C and 850°C, and in other even more preferred embodiments, the temperature is comprised between 400°C and 600°C. The time to which it is subjected to said treatment is comprised between 45 minutes and 90 minutes, being an interval between 50 minutes and 75 minutes in a more preferred embodiment. Heating which transforms the precursor can likewise be carried out in electric or gas ovens both in a stationary manner and by moving the objects through the oven. The heating speed can be very high, causing a sudden increase in temperature from room temperature, which can be comprised between 18 and 24°, and in preferred embodiments 20°C, to the desired temperature, which is the temperature of the thermal treatment indicated above, and in a time interval of several seconds, being an interval of 5 to 30 seconds in a preferred embodiment and between 15 and 20 seconds in a more preferred embodiment. This enables shortening the treatment times and may enable the application of this process to substrates which do not tolerate prolonged heating. Depending on the precursor, this ultrafast thermal treatment can be carried out even in the presence of air. In general, prolonged heating at the indicated temperatures in the presence of air gives rise to the combustion of the precursor polymer, without any anticorrosive carbonaceous vitreous enamel layer remaining. However, the complete or partial removal of air may not be required by shortening the heating times and suitably selecting the treatment temperature.

Heating can also be carried out by different methods including microwave treatment or magnetic induction for short time periods. Transformation of the precursor of the vitreous coating by microwave irradiation and the conditions and times required cannot be deduced from the state of the art given that it is known that phenolic resins are stable against microwaves where they do not experience any transformation.

When, in a preferred embodiment of the present invention, the coating is heated by means of microwaves, the treatment consists of radiating said surface for a time interval of between 30 seconds and 90 seconds, being even more preferably for a period of 60 seconds, at a power comprised between 400 W and 800 W, being even more preferably at a power between 500 W and 700 W, followed by a rest period of between 3 and 6 minutes. This microwave treatment cycle is repeated "n" times until obtaining the desired coating, with the number "n" being comprised between 2 and 6 repetitions of the treatment cycle in a preferred embodiment and between 2 and 4 repetitions of the treatment cycle in an even more preferred embodiment. The microwave equipment used can be fixed, operating continuously or discontinuously by means of belts moving therein. Alternatively, for large objects to be coated, the microwave equipment can be portable and handled by an operator.

In another preferred embodiment, when the transformation of the precursor is by magnetic induction, the treatment consists of subjecting said surface for a time interval of between 1 minute and 8 minutes, being even more preferably for a period of 1 to 5 minutes, to a temperature comprised between 400°C and 750°C, being even more preferably to a power between 500°C and 600°C, followed by a rest period of between 8 and 11 minutes, in the absence of oxygen. This microwave treatment cycle is repeated "n" times until obtaining the desired coating, with the number "n" being comprised between 2 and 10 repetitions of the treatment cycle in a preferred embodiment and between 2 and 4 repetitions of the treatment cycle in an even more embodiment.

In an even more preferred embodiment of the present invention, in the microwave treatment or magnetic induction, the precursor layer may contain particles acting additionally as susceptor or inductor centers where radiation is preferably absorbed or where magnetic induction changes and localized heating of the precursor layer are caused, without modifying the properties of the object that they coat.

Transformation of the precursor can be carried out by means of other physical methods such as irradiation with infrared radiation. One variant is the exposure of the coating to laser pulses of different wavelengths which can range from infrared to ultraviolet. In certain cases, the precursor polymer must be modified by means of the additivation of a component which acts as a photon collector, according to the wavelength. A suitable combination is the use of zinc phthalocyanines as an additive and, in a preferred embodiment, laser with a wavelength in the visible spectrum between 450 nm and 800 nm is used, with the wavelength being between 500 and 650 nm in a more preferred embodiment, and being 532 nm in an even more preferred embodiment, in order to induce the change. The efficiency of this process may depend on the nature of the material to be coated, with the use of lasers being more efficient in cases in which the precursor is coating metals or quartz. The process can preferably be carried out in an inert atmosphere or also in the air according to the precursor. Laser power and beam form control can determine the penetration of the treatment area, where it can occur selectively in the precursor film without affecting the substrate. High-power infrared lasers can transform the precursor into vitreous enamel within seconds, with there being the possibility of performing a number n of repetitions, wherein the number n is preferably between 2 and 5, and more preferably 4.

In embodiments of the present invention, the laser can be a laser of any wavelength. In a preferred embodiment of the present invention, CO₂ laser is more suitable if the coating does not have a dye as an additive. In another preferred embodiment of the invention in which the precursor of the coating has a dye in its composition, the more suitable wavelength is that which irradiates the dye.

Other methods for transforming the precursor into the carbonaceous enamel which may also be suitable are the action of plasmas, including atmospheric pressure plasmas, or electric discharges.

In a preferred embodiment of the present invention in which transformation of the precursor is carried out by means of plasma, the treatment consists of using cold plasma of different gases, with the plasma being hydrogen or methane plasma at atmospheric pressure in a more preferred embodiment, requiring cycles in which exposure to plasma for an interval of between 12 and 18 minutes is alternated with rest periods of the same time interval, being a time period of between 13 and 16 minutes in an even more preferred embodiment, and a time of 15 minutes in an even more preferred embodiment. In the present document, cold plasma of different gases is indicated given that the present treatment is performed at a cold temperature close to room temperature, being a temperature comprised between 15°C and 25°C in the context of the present invention, being even more preferably a temperature comprised between 16 and 19°C.

In the context of the present invention, atmospheric pressure is understood to mean the weight of an air column on a particular point of the earth's surface, and in the scope of the present invention, the atmospheric pressure value is 101.325 kPa.

These precursor films which are transformed into carbonaceous vitreous enamels may comprise, in their composition, from 0.1 to 10% by weight, with respect to the total, of at least one additive providing certain properties to the coating, and which can be observed in the matrix of the enamels when they are analyzed by means of electron microscopy. In the scope of protection of the present invention, these additives are classified into additives with a specific function, on the basis of which they are referred to with the following name in the present document:
- sacrificial agent,
- pigmenting function, or
- precursor polymer transformation promoting function.

In a preferred embodiment of the present invention in which the additive performs the function of a sacrificial agent, said additives experience oxidation in preference to the surface of the substrate where they are deposited and are selected from the group consisting of zinc nanoparticles, nickel nanoparticles, or a combination of the above. In particular embodiments of the invention, the additive performing the function of a sacrificial agent is selected from the group consisting of zinc nanoparticles, nickel nanoparticles, aluminum nanoparticles, or combination of the above.

In a preferred embodiment of the present invention in which the additive performs an aesthetic function which, in the present document, is also referred to as pigmenting function, and is aluminum nanoparticles or metal oxides preferably selected from the group consisting of titanium oxides, iron oxides, transition metal oxides, or a combination of the above, with some of them being pigments which modify the visual aspect of the enamel.

In the scope of the present invention, it should be indicated that the carbonaceous vitreous enamels present resistance against chemical oxidation by environmental or chemical agents which greatly depends on the residual presence of heteroatoms in the material and cannot be deduced from the state of the art in anticorrosive enamels. Specifically, it has been observed that the presence of N or P in the composition in a percentage between 0.1 and 10%, and more specifically at about 5%, makes the carbonaceous materials considerably resistant to chemical oxidation. In that sense, carbonaceous materials containing 5% of N cannot be oxidized by means of potassium permanganate in sulfuric acid. This high stability against oxidizing agents, along with the barrier effect of the continuous film, are the reasons why the coating is protected against corrosion. In contrast to the behavior of the carbonaceous enamels containing N, P, B, or S in their composition, a similar treatment with potassium permanganate in sulfuric acid of a carbonaceous enamel containing only C, H, and O, such as the enamels known in the state of the art, gives rise to the complete oxidation thereof, with the complete dissolution of the enamel in the reactive medium. In that sense, one characteristic of the carbonaceous vitreous enamels of the present invention is that the enamels, either coated on objects or alone in the absence of object to be coated, are capable of withstanding a potassium permanganate solution in concentrated sulfuric acid without experiencing oxidation. This is due to the extremely aggressive environment entailed by the combination of potassium permanganate in sulfuric acid and demonstrates the surprising and much higher degree of protection against corrosion provided by the presence of heteroatoms N, P, and S on the enamel.

Lastly, another object of the invention relates to the use of the anticorrosive coating described in the present document for forming, on the surface of a substrate, a continuous layer that is resistant to corrosion and chemical and environmental oxidation. Preferably, the object of the invention relates to the use of the coating for forming, on the surface of a substrate, a continuous layer that is resistant to corrosion in a saline chamber at 35°C with 50 g L⁻¹ NaCI aerosol for more than 1000 h, chemical oxidation with potassium permanganate in sulfuric acid at 35°C and environmental oxidation.

For this reason, the present invention is also defined by the following particular embodiments:
1. An anticorrosive coating for coating a substrate, characterized in that:
   a. it comprises a carbonaceous vitreous enamel with an amorphous structure, with a carbon atom content greater than 40% with respect to the total number of atoms and wherein said carbon atoms are sp² and sp³ hybridized;
   b. it has a uniform thickness on the surface of the substrate of 1-100 nm.
2. The anticorrosive coating according to embodiment 1, wherein the carbonaceous vitreous enamel has a Raman spectrum with three vibrations in the regions between 3000 and 2700, 1650 and 1550, and 1400 and 1300 cm⁻¹.
3. The anticorrosive coating according to embodiment 1 or 2, comprising heteroatoms between 0 and 10% by weight with respect to the total number of atoms, selected from the group consisting of N, P, Si, B, or a combination thereof.
4. A method for obtaining an anticorrosive coating described in embodiment 1, characterized in that it comprises:
   a. depositing a natural or synthetic precursor polymer with a thickness between 1 nm and 100 nm on the surface of a substrate by means of immersion, painting, or aerosol, and
   b. transforming the precursor polymer into a carbonaceous vitreous enamel by means of:
      - thermal treatment using an electric or gas oven at a temperature between 350°C and 900°C for a period of 45 to 90 minutes; or
      - microwave irradiation at a power of between 400 W and 800 W for a period between 30 and 90 seconds, followed by a rest period of 3 to 6 minutes, with the treatment and rest interval being repeated between 2 and 6 times; or
      - magnetic induction at a temperature comprised between 400°C and 750°C for a period of between 1 and 8 minutes, followed by a rest period of between 8 and 11 minutes, in the absence of oxygen, with the treatment and rest interval being repeated between 4 and 10 times; or
      - continuous laser irradiation for 30 seconds or pulsed laser irradiation by means of 10 pulses per second for 30 seconds at a wavelength comprised between 255 and 1200 nm, with the irradiation being repeated up to a maximum of 10 times with rest intervals of one minute; or
      - by means of exposure to gas plasma at atmospheric pressure for an interval of between 12 and 18 minutes, followed by rest periods of the same time interval.
5. The method for obtaining an anticorrosive coating according to embodiment 4, wherein said method comprises an additional step prior to step (a) which consists of pre-treating the surface of the substrate by means of the technique selected from the group consisting of corrosive chemical treatments with acids, bases, oxidizing or reducing agents, chemical cleaning, or physical processes selected from mechanical impacts and blasting, as well as any one of the combinations thereof.
6. The method for obtaining an anticorrosive coating according to embodiment 4 or 5, wherein the substrate is selected from the group consisting of a metallic material, ceramic, wood, glass, resin, fiber, a polymer material, and an already constructed building element selected from façades and sculptures.
7. The method for obtaining an anticorrosive coating according to embodiment 6, wherein when the substrate is a metallic material, it is selected from the group consisting of iron, aluminum, titanium, copper and silver, as well as any one of the alloys thereof.
8. The method for obtaining an anticorrosive coating according to any one of embodiments 4 to 7, wherein the precursor polymer is a natural or synthetic polymer.
9. The method for obtaining an anticorrosive coating according to embodiment 6, wherein when the substrate is a polymer material, it is selected from the group consisting of resins, fiber, and plastic material, as well as any one of the combinations thereof.
10. The method for obtaining an anticorrosive coating according to embodiment 8, wherein when the precursor polymer is a natural polymer, it is a natural polysaccharide or protein which is selected from the group consisting of alginates, chitosan, carrageenans, and gelatins, as well as any one of the combinations thereof.
11. The method for obtaining an anticorrosive coating according to embodiment 8, wherein when the precursor polymer is a synthetic polymer, it is selected from the group consisting of polystyrene, substituted soluble polystyrene, and polyacrylonitrile, as well as any one of the combinations thereof.
12. The method for obtaining an anticorrosive coating according to any one of embodiments 4 to 11, wherein the precursor polymer comprises, in its composition, 0.1 to 10% by weight with respect to the total weight of at least one additive performing the function of a sacrificial agent, a pigmenting function, or a precursor polymer transformation promoting function.
13. The method for obtaining an anticorrosive coating according to embodiment 12, wherein when the additive performs the function of a sacrificial agent, it is selected from the group consisting of zinc nanoparticles, nickel nanoparticles, and aluminum nanoparticles, or a combination of the above.
14. The method for obtaining an anticorrosive coating according to embodiment 12, wherein when the additive performs a pigmenting function, aluminum nanoparticles or metal oxides are selected from the group consisting of titanium oxides, iron oxides, and transition metal oxides, as well as any one of the combinations thereof.
15. The method for obtaining an anticorrosive coating according to embodiment 12, wherein when the additive performs a precursor polymer transformation promoting function, it is selected from the group consisting of silicon carbide and iron carbide nanoparticles.
16. Use of an anticorrosive coating according to embodiment 1 for forming a continuous layer that is resistant to corrosion and chemical and environmental oxidation on the surface of a substrate.

Based on the technical features of the carbonaceous anticorrosive coating of the present invention, the following advantages are derived:
- the coating constitutes a continuous film without any cracks or holes which it coats completely;
- the coating is shape-conforming, where it conforms faithfully to the shape of an object having any geometric figure, form, or size which it coats;
- the coating comprises heteroatoms other than O in its composition, withstands extreme environmental conditions for a longer period of time without the protected substrate experiencing etching, and also presents improved resistance to oxidizing and corrosive agents;

- as a result of its hydrophobic nature, the coating repels water and may furthermore have ion scavenging capacity
- the coating has a high electric and thermal conductivity;
- the coating presents resistance against chemical oxidation by environmental or chemical agents which depends on the nature and content of at least one heteroatom other than O.

### BRIEF DESCRIPTION OF THE FIGURES

Figure 1. Diagram of the method for preparing the carbonaceous anticorrosive enamel coatings of the present invention.
Figure 2. Vibrational Raman spectrum of a carbonaceous vitreous enamel recorded by means of laser excitation at 514 nm. The Raman spectra can be considered the fingerprint of the type of carbonaceous anticorrosive coatings described in the present invention.

### DESCRIPTION OF THE EXAMPLES OF THE PRESENT INVENTION

For the purpose of contributing to better understand the invention, and according to a practical embodiment thereof, a series of preferred exemplary embodiments of the present invention are attached as an integral part of this description.

Having presented the general conditions which must be fulfilled by the precursors, the way of applying these precursors, and how these precursors can be transformed into the anticorrosive carbonaceous vitreous coatings, some representative examples of the present invention are described below for the purpose of illustrating the substrates which can be coated, the precursors and additives which they may contain, and the methods which transform the precursor into the carbonaceous enamel.

### Example 1. Preparation of a carbonaceous vitreous coating containing N as a heteroatom on stainless steel from chitosan.

100 ml of aqueous solution of 200 mg of commercial chitosan (degree of deacetylation >90%) are prepared using 200 µl of acetic acid to facilitate the process. The steel object to be coated is subjected to cleaning which can include a detergent formulation, followed by treatment with 0.05 M hydrochloric acid at room temperature for 1 hour. The object is then washed with distilled water, dried with forced hot air, and subjected to abrasive blasting in order to adapt the surface of the object to be coated and favor the subsequent adhesion of the antioxidant carbonaceous vitreous enamel. The steel object pre-treated in the above manner is submerged into the chitosan solution at room temperature for ten minutes. The object is extracted from the solution and dried. Alternatively, depending on the shape of the object, deposition of the chitosan layer can be carried out by introducing the object in a chamber completely spraying the surface of the object with an aerosol of the previously prepared chitosan solution. The chamber can be at a temperature greater than room temperature, particularly at 60°C. Other ways for depositing the chitosan layer can be by means of dipping or painting the surface. The normal thicknesses of the chitosan coating in the indicated conditions are between 30 and 100 nm. After depositing the chitosan layer on the steel object to be coated, it is subjected to microwave heating inside a suitable sarcophagus with a power of 500 W for 40 seconds, whereby transformation of the chitosan into the carbonaceous enamel occurs. An alternative heating method consists of placing the object on a moving belt or support which goes through an area where the temperature is 700°C or higher and oxygen is absent or at a low concentration. The length of the oven can be one linear meter, the atmosphere can be oxygen-depleted, and the speed of the object therein can be 10 cm × min⁻¹. Alternatively, the object can also be heated in a stationary manner in a closed container inside an electric or gas oven. Chemical analysis of the enamel indicates that the carbon content of this enamel is 78%, with oxygen being present in a percentage of 17% by weight and N in a percentage of 5%. This enamel is adhered on the surface according to the grid method with a sharp object and attempt is made to remove the enamel from a grid using an adhesive tape. This enamel protects the steel from corrosion by immersion in 0.1 M hydrochloric acid at a temperature of 20°C for 5 h.

The behavior of this enamel in a saline chamber visually shows that the coated steel object does not experience apparent etching when exposed to an aerosol of 50 g × L⁻¹ NaCI solution for 1000 h at a temperature of 35°C. In contrast, a similar treatment of the same object coated with a vitreous enamel originating from the pyrolysis of a phenol-formaldehyde resin visually shows corrosion areas and spots on the object.

### Example 2. Preparation of a carbonaceous vitreous coating containing N as a heteroatom on stainless steel from chitosan containing zinc nanoparticles.

This is performed as in the previous example with the difference that the chitosan concentration is higher because 300 mg of chitosan and 400 µl of acetic acid are dissolved in 100 ml of distilled water. Once the dissolution is completed, zinc nanoparticles having an average size of 50 nm with a percentage by weight with respect to chitosan of 2% are suspended. Other nanoparticles which can be used as an additive are aluminum nanoparticles, nickel nanoparticles, silica nanoparticles, and TiO₂ nanoparticles with a percentage by weight, for each of them, of 0.1-5%. Mixtures can also be dispersed in suitable proportions of several of these nanoparticles in a total percentage below 5% by weight. The viscous suspension is homogenized by mechanical means or ultrasounds and used to form the precursor film of the antioxidant coating. The rest of the steps indicated in Figure 1 are carried out as mentioned in Example 1. The N content of the resulting vitreous enamel is 5%.

### Example 3. Preparation of a carbonaceous vitreous coating on stainless steel from alginate.

This is performed as in Example 1 but using sodium alginate as a precursor of the carbonaceous antioxidant enamel. To that end, sodium alginate solution in water is prepared by dissolving 250 mg of sodium alginate in 100 ml of milliQ water, the pH of which has been previously adjusted to a value of 7 using 10⁻² M NaOH. This solution can be filtered at pressure if non-dissolved suspending particles are observed. The surface of the object to be coated can be pre-treated as indicated in Example 1. Coating of the steel object and transformation thereof into the carbonaceous antioxidant enamel can be carried out by any of the methods indicated in Example 1. The carbon content of the enamel is 81%, with the oxygen content being 18%.

### Example 4. Preparation of a carbonaceous vitreous coating containing N as a heteroatom on stainless steel from ammonium alginate.

This is performed as in Example 1 but using ammonium alginate as a precursor of the carbonaceous antioxidant enamel. To that end, ammonium alginate solution in water is prepared by dissolving 250 mg of alginic acid in 100 ml of milliQ water, the pH of which has been previously adjusted to a value of 7 using 10⁻² M NH₄OH. This solution can be filtered at pressure if non-dissolved suspending particles are observed. The surface of the object to be coated can be pre-treated as indicated in Example 1. Coating of the steel object and transformation thereof into the carbonaceous antioxidant enamel can be carried out by any of the methods indicated in Example 1. The carbon content of the enamel is 79%, with the oxygen content and the nitrogen content being 16 and 5%, respectively.

### Example 5. Preparation of a carbonaceous vitreous coating on stainless steel from gelatin.

This is performed as in Example 1 but using a solution of 100 ml of distilled water containing 200 mg of gelatin of animal origin as a precursor of the carbonaceous antioxidant coating. After transformation into carbonaceous vitreous enamel, the N content and the S content is 4 and 0.3%, respectively.

### Example 6. Preparation of a carbonaceous vitreous coating on stainless steel from carrageenan.

This is performed as in Example 1 but using a solution of 100 ml of distilled water containing 200 mg of carrageenan, preferably its kappa variety, as a precursor of the carbonaceous antioxidant coating. Elemental analysis of the enamel reveals that the carbon content is 68%, with sulfur being present in the composition in a percentage by weight of 7% and oxygen in a percentage by weight of 25%.

### Example 7. Preparation of a carbonaceous vitreous coating on stainless steel from polystyrene.

Unlike the preceding examples, the use of polystyrene requires organic solvents. In this sense, 200 mg of polystyrene having an average molecular weight of 150000 are dissolved in 100 ml of dichloromethane. The stainless steel object is cleaned following the methods used in Example 1. The clean object is submerged in the solution containing polystyrene for 10 minutes. After this time has elapsed, the object is recovered and left to dry by evaporation of the solvent. Antioxidant coating can be carried out by any of the treatments indicated above.

### Example 8. Preparation of a carbonaceous vitreous coating on stainless steel from polyacrylonitrile.

200 mg of polyacrylonitrile having a low molecular weight are dissolved in 100 ml of dimethylformamide by heating at 60°C to favor the process. This solution is used to form a coating of the stainless steel with polyacrylonitrile as a precursor which is transformed by heating, following one of the indicated methods, into a carbonaceous vitreous enamel with a high nitrogen content of about 14% by weight.

### Example 9. Preparation of a carbonaceous vitreous coating on an object made of titanium, or copper, or another metal from chitosan.

The method indicated in Example 1 is followed but using a metallic object other than stainless steel which can be made of titanium, copper, or another metal, including (semi)noble metals such as silver or nickel. The surface can be cleaned as indicated in Example 1. The coated metallic object passes the adherence test by means of an adhesive tape and withstands corrosion by immersion in 0.1 M hydrochloric acid for 5 h.

### Example 10. Preparation of a carbonaceous vitreous coating on a ceramic object from chitosan.

A chitosan solution in water is prepared as indicated in Example 1. The surface of the ceramic object can be subjected to mechanical abrasion methods to increase its roughness. Next, the ceramic object to be coated is cleaned by mechanical methods, followed by washing with detergents. The surface is then coated with the chitosan layer. If the object is flat, a suitable coating method is to move the object forward at a constant speed through a curtain of solution, followed by the passage of a mechanical device which controls the thickness of the solution layer remaining on the flat surface. Transformation of the chitosan film can be carried out by introducing the ceramic object into an electric oven at 700°C for 60 minutes. The atmosphere of the oven is purged with a nitrogen flow in order to prevent oxygen from entering the process.

### Example 11. Preparation of a carbonaceous vitreous coating on a wooden object from chitosan by irradiation with an infrared laser.

A chitosan solution in water is prepared as indicated in Example 1. The surface of the wooden object to be coated is mechanically cleaned, with the object then being painted with chitosan gel. Painting can be manual, or by means of spraying with an aerosol, or another automatic method. The wooden object with the coating is left to dry at a temperature of 50°C for 1 h. Transformation of the precursor layer into the protective carbonaceous coating is carried out by irradiation with a CO₂ laser operating at 20% of its maximum power. The system allows the object to be arranged on a motor-driven support such that it moves in all the 3 dimensions of the space and the entire surface thereof can be exposed to the laser beam. The N content of the resulting carbonaceous vitreous enamel is 8%.

### Example 12. Preparation of a carbonaceous vitreous coating on a wooden object from chitosan films containing silicon carbide nanoparticles as a susceptor and transformation by means of microwaves.

An aqueous chitosan suspension is prepared as indicated in Example 2, but substituting zinc nanoparticles in the same proportion with other silicon carbide nanoparticles having an average size of 20 nm. Alternatively, nanoparticles of other susceptor materials can be used. The dispersion is homogenized by mechanical means and ultrasounds. The homogeneous dispersion is used to coat the surface of the wooden object. Transformation of the chitosan precursor into the protective carbonaceous coating is carried out by introducing the object in a microwave oven which causes localized heating preferably around the silicon carbide nanoparticles. The power of the microwave oven is 500 W and the treatment time is two 30 second periods, each with an interval between the two treatments of 5 minutes. The N content of the resulting vitreous enamel is 4 %.

### Example 13. Preparation of a carbonaceous vitreous coating on a wooden object from chitosan films containing iron carbide nanoparticles as an inductor and transformation by means of magnetic induction.

This is performed as in Example 12, but replacing silicon carbide with iron carbide having a particle size of less than 40 nm. Alternatively, nanoparticles of other inductor materials can be used. After coating the surface of the wooden object, transformation of the chitosan into the protective carbonaceous coating can be carried out by means of magnetic induction controlling the temperature of the layer at values of about 550°C for a time period of 5 minutes. Induction treatment can be repeated for other periods after a 10 minute interval, among others. The N content of the vitreous enamel film is 5%.

### Example 14. Preparation of a carbonaceous vitreous coating on a plastic object from polystyrene films by transformation with an infrared laser.

A polystyrene solution in dichloromethane is prepared as indicated in Example 7 and the object formed by resin, fiber, or plastic material is coated by means of spraying with an aerosol in a chamber at 50°C. After drying the object, the protective carbonaceous film is formed by irradiating the surface with a CO₂ laser operating at a power below 20%.

### Example 15. Preparation of a carbonaceous vitreous coating on a plastic object from poly(4-aminostyrene) films by transformation with an infrared laser.

A poly(4-aminostyrene) solution in 0.1 M hydrochloric acid is prepared and the object formed by resin, fiber, or plastic material is coated by means of spraying with an aerosol in a chamber at 50°C. After drying the object, the protective carbonaceous film is formed by irradiating the surface with a CO₂ laser operating at a power below 20%. The N content of the resulting vitreous enamel was 6% by weight.

### Example 16. Preparation of a carbonaceous vitreous coating on an object made of resin, polymer fiber, or plastic material from polyacrylonitrile films containing silicon carbide nanoparticles as an inductor and transformation by means of microwaves.

200 mg of polyacrylonitrile having a low molecular weight are dissolved in 100 ml of methylpyrrolidone by means of stirring for 24 h. After that time has elapsed, 25 mg of silicon carbide nanoparticles are added and the suspension is homogeneously dispersed by means of mechanical stirring or ultrasounds. This suspension is used to coat the object made of resin, polymer fiber, or plastic material. Transformation of the precursor film into the protective carbonaceous coating is carried out by means of microwave irradiation at a power of 500 W for a period of 30 seconds. This microwave treatment can be repeated 10 minutes after the first application. The N content of the resulting carbonaceous vitreous coating is 10% by weight.

### Example 17. Preparation of a carbonaceous vitreous coating on an object made of resin, polymer fiber, or plastic material from polystyrene films containing iron carbide nanoparticles as an inductor and transformation by means of magnetic induction.

200 mg of polystyrene having an average molecular weight of 150000 Dalton are dissolved in 100 ml of dichloromethane by stirring for 2 h at room temperature. After this time has elapsed, iron carbide nanoparticles having an average size of 25 nm are suspended and the suspension is stirred or subjected to ultrasounds. This dispersion is used to form the precursor films which are transformed into the protective carbonaceous coating on the object made of resin, polymer fiber, or plastic material when they are subjected to heating by magnetic induction at temperatures of 550°C for 1 minute in a chamber in the absence of oxygen. The magnetic induction cycle can be repeated a second time 10 minutes after the first treatment.

### Example 18. Preparation of a carbonaceous vitreous coating on an object made of resin, polymer fiber, or plastic material from poly(4-aminostyrene) films containing iron carbide nanoparticles as an inductor and transformation by means of magnetic induction.

200 mg of poly(4-aminostyrene) having an average molecular weight of 150000 Dalton are dissolved in 100 ml of dichloromethane by stirring for 2 h at room temperature. After this time has elapsed, iron carbide nanoparticles having an average size of 25 nm are suspended and the suspension is stirred or subjected to ultrasounds. This dispersion is used to form the precursor films which are transformed into the protective carbonaceous coating on the object made of resin, polymer fiber, or plastic material when they are subjected to heating by magnetic induction at temperatures of 550°C for 1 minute in a chamber in the absence of oxygen. The magnetic induction cycle can be repeated a second time 10 minutes after the first treatment. The N content of the resulting vitreous enamel is 3%.

### Example 19. Preparation of a carbonaceous vitreous coating layer on the façade of an already constructed building from a chitosan solution containing silicon carbide nanoparticles as a susceptor and transformation by microwaves.

The fagade of the building to be coated is cleaned with detergents and then rinsed. The façade is then sprayed or painted with a chitosan suspension containing silicon carbide prepared as indicated in Examples 1 and 12. This film is transformed into the corresponding vitreous enamel by treatment with 30 second cycles at a power of 700 W with a portable microwave emitter. The treatment cycle can be repeated two or more times.

### Example 20. Preparation of a carbonaceous vitreous coating layer on external or internal building elements from a chitosan solution containing silicon carbide nanoparticles as a susceptor and transformation by microwaves.

Following the method described in Example 19, other types of both internal and external building elements can be protected with the carbonaceous anticorrosive enamel.

### Example 21. Preparation of a carbonaceous vitreous coating layer on an aircraft fuselage component from a chitosan solution containing silicon carbide nanoparticles as a susceptor and transformation by microwaves.

This is performed as in Example 12 but using a clean aircraft fuselage part.

## Claims

1. An anticorrosive coating for coating a substrate, **characterized in that**:
a. it comprises a carbonaceous vitreous enamel with an amorphous structure, with a carbon atom (C) content greater than 40% and wherein said carbon atoms are sp² and sp³ hybridized, or
a carbonaceous vitreous enamel with an amorphous structure, with a carbon atom (C) content greater than 40%, wherein said carbon atoms are sp² and sp³ hybridized, and
- oxygen atoms (O) in a percentage below 20%;
- at least one heteroatom other than O in a percentage below 20%; the percentage by weight being with respect to the total;
b. it has a uniform thickness on the surface of the substrate of between 1 and 100 nm.

2. The anticorrosive coating according to claim 1, wherein the carbonaceous vitreous enamel has a Raman spectrum with three vibrations in the regions between 3000 and 2700, 1650 and 1550, and 1400 and 1300 cm⁻¹.

3. The anticorrosive coating according to claim 1 or 2, wherein the carbonaceous vitreous enamel has an XPS spectrum where peaks corresponding to C, O, and at least one heteroatom other than O are observed.

4. The anticorrosive coating according to any one of claims 1 to 3, wherein the enamel comprises 0.1% to 20% by weight with respect to the total of at least one heteroatom other than O which is selected from the group consisting of N, P, S, Si, B, or a combination thereof.

5. A method for obtaining an anticorrosive coating according to any one of claims 1 to 4, **characterized in that** it comprises:
a. depositing a natural or synthetic precursor polymer with a thickness between 1 nm and 100 nm on the surface of a substrate by means of immersion, painting, or aerosol, and
b. transforming the precursor polymer into a carbonaceous vitreous enamel by means of:
- microwave irradiation at a power of between 400 W and 800 W for a period between 30 and 90 seconds, followed by a rest period of 3 to 6 minutes, with the treatment and rest interval being repeated between 2 and 6 times; or
- magnetic induction at a temperature comprised between 400°C and 750°C for a period of between 1 and 8 minutes, followed by a rest period of between 8 and 11 minutes, in the absence of oxygen, with the treatment and rest interval being repeated between 4 and 10 times; or
- continuous laser irradiation for several seconds or pulsing with a repetition of 10 pulses per second for 30 seconds, wherein the wavelength of the laser can be comprised between 255 and 1200 nm and wherein after an interval of 1 minute, the laser irradiation can be repeated up to ten occasions; or
- by means of exposure to gas plasma at atmospheric pressure for an interval of between 12 and 18 minutes, followed by rest periods of the same time interval.

6. The method for obtaining an anticorrosive coating according to claim 5, wherein said method comprises an additional step prior to step (a) which consists of pre-treating the surface of the substrate by means of the technique selected from the group consisting of corrosive chemical treatments with acids, bases, oxidizing or reducing agents, chemical cleaning, or physical processes such as mechanical impacts and blasting, as well as any one of the combinations thereof.

7. The method for obtaining an anticorrosive coating according to claim 5 or 6, wherein the substrate is selected from the group consisting of a metallic material, ceramic, wood, glass, resin, fiber, a polymer material, and an already constructed building element such as façades and sculptures.

8. The method for obtaining an anticorrosive coating according to claim 7, wherein when the substrate is a metallic material, it is selected from the group consisting of iron, aluminum, titanium, copper and silver, as well as any one of the alloys thereof.

9. The method for obtaining an anticorrosive coating according to any one of claims 5 to 8, wherein the precursor polymer is a natural or synthetic polymer and comprises at least one heteroatom other than O in a percentage below 20% by weight with respect to the total of the precursor.

10. The method for obtaining an anticorrosive coating according to claim 9, wherein when the precursor polymer is a natural polymer, it is a natural polysaccharide or protein which is selected from the group consisting of alginates, alginate derivatives, chitosan, chitosan derivatives, carrageenans, and gelatins, as well as any one of the combinations thereof.

11. The method according to claim 10, wherein the precursor is chitosan and comprises, in its composition, 5% by weight of N with respect to the total of the precursor.

12. The method according to claim 10, wherein the precursor is an alginate derivative which is the phosphate ester of alginate and comprises, in its composition, 10% by weight of P with respect to the total of the precursor.

13. The method according to claim 10, wherein the precursor is a chitosan derivative which is the phosphate ester of chitosan and comprises, in its composition, 5% by weight of N and 10% by weight of P with respect to the total of the precursor.

14. The method according to claim 10, wherein the precursor is a chitosan derivative which is the borate ester of chitosan and comprises, in its composition, 5% by weight of N and 4% by weight of B with respect to the total of the precursor.

15. The method for obtaining an anticorrosive coating according to claim 9, wherein when the precursor polymer is a synthetic polymer, it is selected from the group consisting of polystyrene, polystyrene with substituent groups comprising at least one heteroatom other than O, and polyacrylonitrile, as well as any one of the combinations thereof.

16. The method for obtaining an anticorrosive coating according to any one of claims 5 to 15, wherein the precursor polymer comprises, in its composition, 0.1 to 10% by weight with respect to the total weight of at least one additive performing the function of a sacrificial agent, a pigmenting function, or a precursor polymer transformation promoting function.

17. The method for obtaining an anticorrosive coating according to claim 16, wherein when the additive performs the function of a sacrificial agent, it is selected from the group consisting of zinc nanoparticles, nickel nanoparticles, aluminum nanoparticles, or combination of the above.

18. The method for obtaining an anticorrosive coating according to claim 16, wherein when the additive performs a pigmenting function, aluminum nanoparticles or metal oxides are selected from the group consisting of titanium oxides, iron oxides, and transition metal oxides, as well as any one of the combinations thereof.

19. The method for obtaining an anticorrosive coating according to claim 16, wherein when the additive performs a precursor polymer transformation promoting function, it is selected from the group consisting of silicon carbide and iron carbide nanoparticles.

20. Use of an anticorrosive coating according to any one of claims 1 to 4, for forming, on the surface of a substrate, a continuous layer that is resistant to corrosion and chemical and environmental oxidation.

21. The use according to claim 20 for forming, on the surface of a substrate, a continuous layer that is resistant to corrosion in a saline chamber at 35°C with 50 g L⁻¹ NaCl aerosol for more than 1000 h, chemical oxidation with potassium permanganate in sulfuric acid at 35°C and environmental oxidation.
